# EUROPEAN PATENT APPLICATION

(11) **EP 3 837 973 A2**
(43) Date of publication of application: **23.06.2021**
(21) Application number: 20213381.5
(22) Date of filing: 11.12.2020
(51) Int. Cl.: A01K 11/00

(54) **A SYSTEM FOR THE NATIONAL REGISTRATION OF PETS AND RESPECTIVE IDENTIFICATION/LOCATION MEANS**

(30) Priority: 19.12.2019 BR 102019027372
(71) Applicant: Alzeman Fabbro, Carlos Alberto, 06420-000 Barueri (Estado de São Paulo) (BR)
(72) Inventor: Alzeman Fabbro, Carlos Alberto, 06420-000 Barueri (Estado de São Paulo) (BR)
(74) Representative: de Arpe Fernandez, Manuel

(57) **Abstract**

It's a system (10) intended for the registration of pets and respective identification means (20) presented in the form of a TAG (21); such pet registration system (10) comprising a Web and Mobile - Android and IOS technology platform (30) for use in mobile devices (Ap) in general and provided with an interface (31) with means to register general information (I1) such as the pet name, breed, size, weight, age, particular characteristics such as spots and the like in the database, in addition to specific information (12) such as the life history, vaccination history, estrous cycles, surgeries, allergies, controlled medicines, wormers, severe diseases, among others, in addition to basic tutor information (13) indicating the type of contact to be employed or not in cases of losses or escapes of his/her pet such as, for example, communication via site or application, chat, SMS messages, Whatsapp, Telegram, e-mail, Messenger or Skype.

## Description

### TECHNICAL FIELD OF THE INVENTION

This invention patent refers to improvements to a system intended for the national registration of pets an respective identification/location means where, notably, the referred system presents a Web and Mobile Android and IOS technology platform which allows accessibility in mobile devices such as, cell phones, notebooks, tablets, among others, and allows the register of general and specific data of the pet such as the name, life history, vaccination history, estrous cycle, surgeries, allergies, controlled medicines, wormers, severe diseases, as well as restrict information about the tutors which, in combination with the predictability of a physical identification means in the TAG form guarantees the connection of the person who found the animal with the respective tutor on a practical and confidential way without disclosing the tutor's personal information.

### HISTORY OF THE INVENTION

It's currently known that the pets, especially dogs and cats are family members sharing the routine and affection, in addition to the fact that the coexistence with pets has been proven to result in benefits to their tutors such as the improvement of the heart health, decreased stress, aid to depression treatment, among other benefits.

Therefore, one of the great discouragements is the fact that when the referred animals escape from their homes, from lodges, veterinary clinics, etc. and are no longer found thus becoming a traumatic experience to their tutors.

There are currently in the market some products which assist with the location of such lost animals such as, for example, the microchip implantation comprising a surgical bioglass capsule and placed under the animal skin, being that the referred microchip emits energy when read with the reader which exhibits the contained data such as the tutor's information.

The main disadvantage of the above mentioned microchip location form is the fact that once implanted, it's not possible to immediately view the predictability of the identification means, the identification being only possible in some veterinary clinics equipped with chip readers, being an inconvenience for the person who found the animal who will have to address the lost animal to a clinic and pay for the consultation.

Another more efficient location means and existing in the market consists in the used of TAGs with NFC and QRCODE in the pet which, when lost, can be found through reading with a mobile device and application which enables the connection between the tutor and the person who found the animal.

Although the referred location means is efficient, the currently available technology platforms do not provide, for example, full information on the lost or abandoned animals' records, a fact that may lead to the animal death in case it requires daily and essential medicines to survive, such as for canine diabetes.

Another inconvenience is the fact that the current platforms make all the tutor's personal data available, being thus, a target for scammers who may eventually extort a cash amount with the false location of the lost animal.

Another inconvenience is the fact that the current TAGs with NVD and QRCODE technologies are not manufactured with materials which enable the pet identification in dark environments.

### STATE-OF-THE-ART ANALYSIS

In a search conducted in specialized databanks, documents related to lost animal location means were found, such as in document no. BR10.2015.018516-2 which refers to a dog collar containing an accessory intended for the identification and prevention of escapes, belonging to the technical sector of articles for animals and developed in order to facilitate the location or prevent dogs from escaping from their homes through wire or iron fences, consists in a main part - the monoblock collar containing an area intended to insert the dog owner's telephone number for easy contact, such as in the case of escape from homes, as well as in two accessories: the first one, a plastic part which can be attached to the collar by means of fittings or straps comprising it, the same not being required to be removed, also containing an area intended to insert the telephone number by means of the bipartite *nda* in its base which present an universal opening and adaptable to almost all the collar sizes; the second one, a monoblock hook where the collar is introduced, being compressed and secured with the toothed parts and locking of the base upper part end with the dented lower end. The hooks can be removed without taking the collar off.

Document no. BR20.2015.013341-9 refers to a device with gps intended for the location of animals, intended to provide increased safety to the animal owners, being possible to locate animals of any size at real time, two models being available, one without requiring a *'Sim Card'* (telephone operator chip) and another model requiring a *'Sim Card',* comprised by the collar and an emergency button which can be activated by any person who finds your animal, the model requiring a *'Sim Card'* also comprising the same items as the previous model, in addition to the sim card slot.

The above mentioned documents, although belonging to the same application field are different from the concerned invention, as it will be seen below, guaranteeing, thus, that it fully complies with the patentability legal requirements.

### PURPOSES OF THE INVENTION

The purpose of the invention is to provide a system intended for the national registration of pets and respective identification/location means where the Web and Mobile Android and IOS technology platform allows the entry of general and specific data of the pet such as the name, life history, vaccination history, estrous cycle, surgeries, allergies, controlled medicines, wormers, severe diseases, among other information.

The purpose of the invention is to provide a system intended for the national registration of pets, the Web and Mobile technology platform of which complies with the general personal data protection law 13.709/2018, as well as with law no. 12.965/14 which establishes principles, guarantees, rights and obligations for the use of Internet in Brazil, specifically, in articles 7^{th} and 16.

The purpose of the invention is to provide a system intended for the national registration of pets, the identification means of which in the form of TAG provides a single identification used for the registration of the pet information in the technology platform databases.

The purpose of the invention is to provide a system intended for the national registration of pets, the identification means of which in the form of TAG is manufactured with specific materials, neon and reflective materials, so as to facilitate the visualization of the Tag in the lost pet during the night or in dark environments, including passers-by who may come to notice that the animal is lost.

Another purpose of this invention is to provide a system for the national registration of pets and respective identification/location means, on which a microchip installed in the metal, PVC, directly in the animal TAG or in another appropriate place is foreseen in order to improve the system communication.

Another purpose of this invention is to provide an identification means in the form of a TAG which can be applied in neck-, chest- or whole body-type collar structure of pets such as dogs and cats.

Another purpose of this invention is to present an identification means in the form of a TAG which can also be configured for application in identification rings intended to be attached to animals, such as birds.

Another purpose of this invention is to provide a system for the national registration of pets, presenting more than one variation of the pets identification means, comprised for providing in the technology platform the possibility to use photographs of the pets' faces, captured and stored in respective profiles, using the recognition of the registered dogs' and cats' snout characteristics to locate them. The referred snout characteristics are similar to the human beings' digital ones, i.e., each animal presents its own particularities.

Another purpose of this invention is to provide a system intended for the national registration of pets, on which, when a photograph of the lost and/or escaping pet's snout is taken and it is identified in the system databases, the procedure to open the record of the identified pet and connect the tutor by triggering alerts and chat will be similar to the process used with the TAG.

### DESCRIPTION OF THE FIGURES

In order to complement this description in order to obtain a better understanding of the characteristics of this invention and in compliance with preferred practice achievement of the same, attached to the description is a set of drawings, where, on an exemplified way, although not being limited, its operation was evidenced.

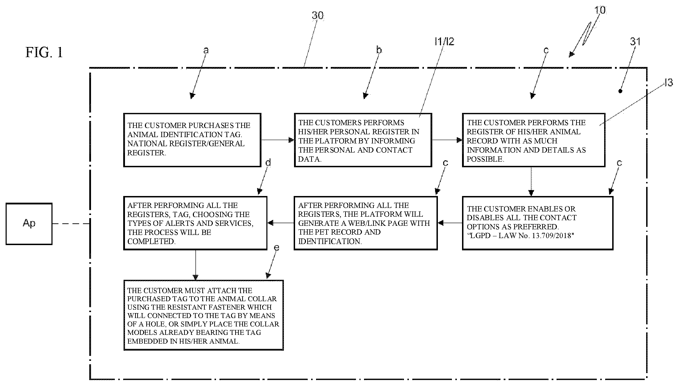

figure 1 discloses a national registration flowchart in the concerned innovative system;

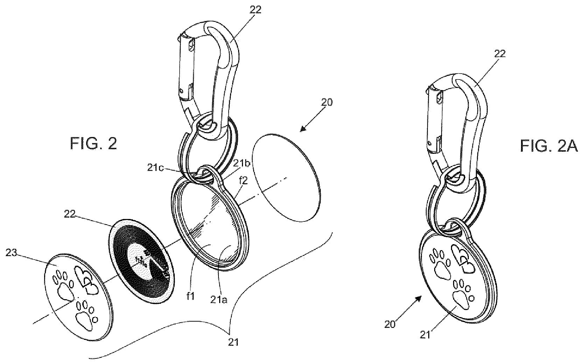

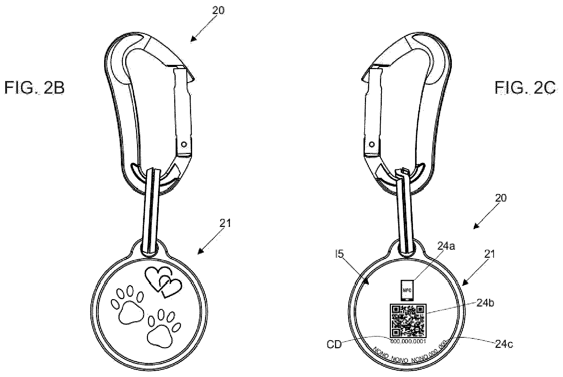

figure 2 shows an exploded perspective view of the elements comprising the identification means in the form of a TAG;
figure 2A illustrates an assembled perspective view of the TAG;
figures 2B and 2C show front and rear views of the TAG;

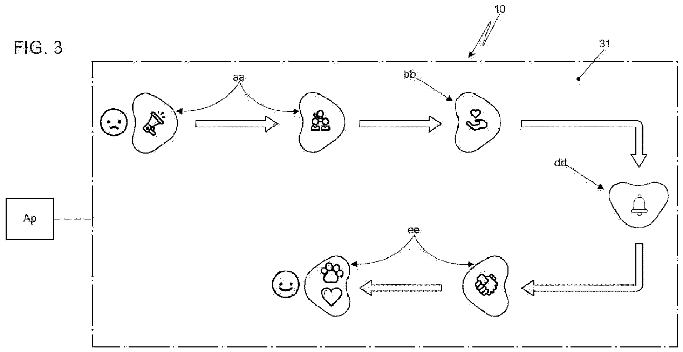

figure 3 depicts a flowchart of the lost or abandoned pet localization steps by using the national pet registration system;
figures 4 and 4A show perspective views of a first and second range of rings for birds provided with the identification TAG and RFID microchip with their respective illustration;
figure 5 shows a perspective of the TAG attached to a collar strap with respective animal illustrations;
figure 6 discloses an image showing the pet snout/face image databank disposition, stored and registered in the innovative system; and
figures 6A and 6B illustrate the registered animals' snouts identification procedure, so that the first photo shows a picture taken of the escaping/lost animal and the next photo illustrates the snout from a databank with previously registered photos, being that one of them corresponds to the escaping animal characteristics.

### DESCRIPTION OF THE INVENTION

With reference to the illustrated drawings, this invention patent refers to the "IMPROVEMENTS TO A SYSTEM INTENDED FOR THE NATIONAL REGISTRATION OF PETS AND RESPECTIVE IDENTIFICATION/LOCATION MEANS", more precisely it refers to a system (10) intended for the registration of pets and respective identification means (20) presented in the form of a TAG (21).

According to this invention, the referred pet registration system (10) comprises a Web and Mobile - Android and IOS technology platform (30) for use in mobile devices (Ap) in general and provided with an interface (31) with a registration means in the database of general information (I1) such as the pet name, breed, size, weight, age, particular characteristics such as spots and the like, in addition to specific information (12) such as the life history, vaccination history, estrous cycles, surgeries, allergies, controlled medicines, wormers, severe diseases, among others, in addition to the tutor's basic information (13), the type of contact to be activated or not in cases of loss or escapes of his/her pet such as, for example, communication via site or application, chat, SMS messages, Whatsapp, Telegram, e-mail, Messenger or Skype.

The referred TAG (21) provides for a single identification formed by a numeric sequence containing ten digits and which comprises an accessibility code (CD) to the platform (30) to register the information (I1)/(I2)/(I3) and beginning of the national registration, being that the referred TAG (21) comprises a structural disk (21a) made of metal, high resistance aluminum or polyvinyl chloride - PVC and provided with a central appendage (21b) where a hole (21c) was made to receive a resistant fastener (22) which, in its turn, is assembled to the pet collar (not shown).

The referred structural disk (21a) is incorporated of attached to one of the faces (f1)/(f2) of chip NFC (22) with an estimated lifecycle of 10 thousand readings, operational temp./hum. of 10 to 60°C / 20% to 60% RH and storage temp./hum. of 20 to 30°C/20% to 60% RH.

The flat faces (f1) and (f2) of the referred disk (21a) receive graphic printings with a polyvinyl chloride PVC (23) layer provided with reflective material, as well as face (f2) is provided with graphic printing containing information (15) related to the pet identification, namely: i) NFC indication symbol (24a); ii) single QRCODE (24b); iii) single identification number (CD); iv) call center number (24c).

The steps comprising the system accessibility (10) for the registration of pets are as follows:
a) Purchase of the TAG (21) in a site or authorized distributor;
b) Access to the platform (30) so as to confirm the service hiring activating the TAG (21) by providing the code (CD), as well as the confirmation of the register with information (I1) and (12) and activation of the information (13) related to the type of contact desired;
c) Subsequently, the platform generates a WEB/LINK page with the pet record and identification;
d) The procedures are completed by processing all the information (I1)/(I2)/(I3) and defining the alert types;
e) After the previous step, the tutor must attach the TAG (21) to the pet's collar.

The steps comprising the beginning of the location by the system (10) are as follows:
aa) In the lack of the pet or the identification that it is lost or escaped, the tutor may or not share with the other people by means of a post in the platform informing the entire community that his/her pet escaped or is lost. All the platform (30) users view the tutors' posts in increasing order, where the last posts are viewed in first place in the list, as well, as a geolocation map indicating the animals lost in that region.
bb) An individual finds the lost animal and by immediately viewing the TAG (21) identifies it is lost by proceeding with the TAG (21) reading with his/her cell phone or contacts the call center number (24c) informing he/she found the lost animal. After reading the Tag (21), the animal record is shown in a maximum time interval of 7s;
cc) In case he/she decides to contact the call center, an attendant request the Tag (21) number in order to contact the tutor and proceed with the intermediation/connection between the tutor and the person who found the pet so as to schedule the rescue;
dd) In case the individual who found the pet decides to read the TAG (21) with the NFC code and QRCODE, an internet browser is opened with the entire record/profile of the found animal showing only the tutor name and the town of residence and in such web screen of the found animal record/profile there's a button with the CHAT name so as the individual who found the animal is able to start a conversation via CHAT with the tutor, being at the tutor's discretion to inform the data through the CHAT and schedule the rescue of his/her lost animal. Whenever a person reads the pet TAG (21), the tutor receives an alert by some means he/she has chosen or by all the active means, being that such alert will show the tutor the date and time the TAG (21) was read and in case the person who read the Tag has the geolocation active in his/her smartphone/cell phone, in such alert, the tutor also receives the location where the reading was conducted containing the street name, the state, the city and the neighborhood, if available; and
ee) Following the connection between the person who found the pet and the tutor, the parties agree the best way to meet and deliver the pet.

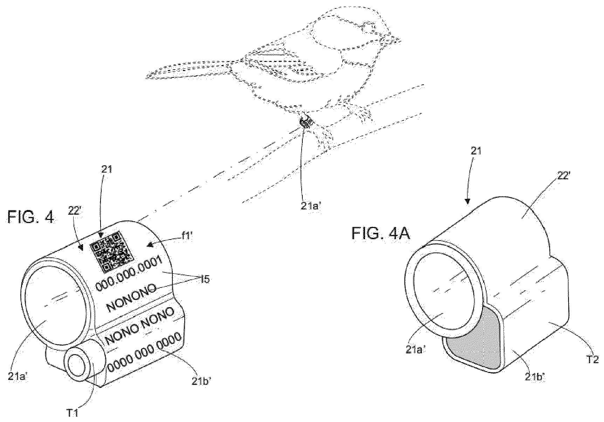

A second range of application of TAG (21) comprises the graphic printing of information (I5) to the external face (f1') of a ring (22') structure comprising a tubular strap (21a') provided with a fastener or not, presenting an external member (21b') presenting two distinct formats, such as tubular (T1), triangular (T2), or other ones to receive a RFID microchip (figures 4 and 4A), being that such tubular strap (21a') can be installed in birds of several breeds.

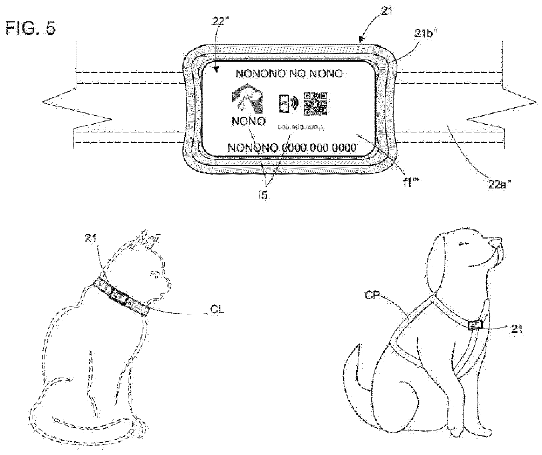

A third range of application of TAG (21) comprises the graphic printing of information (15) to the external face (f1") of a plate (22") placed on rectangular, oblong brackets (22b"), or presenting another appropriate format installed in reflective belts (22a") which may comprise a neck collar (CL); a chest collar (CP) or a body collar of animals such as dogs and cats (figures 5).

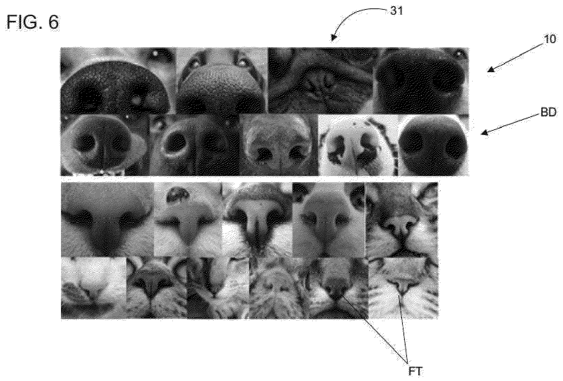

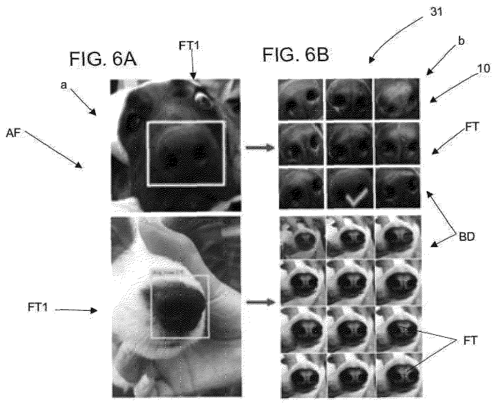

The referred pet registration system (10) presents an interface (31) which may have an additional pet identification means, which enables the storage of photographs (FT) taken of the pets' faces upon registration, so that they are captured and stored in respective profiles, and made available in the system (31) databanks (BD), being that the recognition of escaped pets (AF) is based on steps such as: (a) capture of the escaping/lost animal snout image (FT1) (figure 6A); and (b) processing and identification of the found animal snout/face image (FT1) characteristics compared with the images (FT) available in the databank (BD) so that, if positive, the tutor is contacted according to the procedure provided for in the TAG identification mode.

It's true that when this invention is put into practice, changes can be introduced concerning certain construction and form details, without departing from the basic principles which are clearly substantiated in the claims, being, thus, understood that the employed terminology was not intended to be limiting.

## Claims

1. **"IMPROVEMENTS TO A SYSTEM INTENDED FOR THE NATIONAL REGISTRATION OF PETS AND RESPECTIVE IDENTIFICATION/LOCATION MEANS",** more precisely addresses a system (10) intended for the registration of pets and respective identification means (20) presented in the form of a tag (21); ***characterized* by** a pet registration system (10) comprising a web and mobile - android and ios technology platform (30) for use in mobile devices (Ap) in general and provided with an interface (31) with means to register general information (I1) such as the pet name, breed, size, weight, age, particular characteristics such as spots and the like in the database, in addition to specific information (12) such as the life history, vaccination history, estrous cycles, surgeries, allergies, controlled medicines, wormers, severe diseases, among others, in addition to basic tutor information (13) indicating the type of contact to be employed or not in cases of losses or escapes of his/her pet such as, for example, communication via site or application, chat, SMS messages, whatsapp, telegram, e-mail, messenger or skype; the referred tag (21) provides for a single identification formed by a numeric sequence comprising ten digits and a code (CD) to access the platform (30) in order to register the information (I1)/(I2)/(I3) and beginning of the national registration, being that the referred tag (21) comprises a structural disk (21a) made with metal, high resistance aluminum or polyvinyl chloride - PVC and provided with a central appendage (21b) where a hole is made (21c) to receive a resistant fastener (22) which, in its turn, is attached to the pet collar; the referred structural disk (21a) is incorporated or attached to one of the faces (f1)/(f2) of the NFC chip (22); the flat faces (f1) and (f2) of the referred disk (21a) receive graphic printings with a polyvinyl chloride PVC layer (23) provided with reflective material, as well as the opposed face (f2) which receives a graphic printing with information (15) related to the pet identification, i) NFC indication symbol (24a); ii) single QRCODE (24b); iii) single identification number (CD); iv) call center number (24c).

2. **"IMPROVEMENTS TO A SYSTEM INTENDED FOR THE NATIONAL REGISTRATION OF PETS AND RESPECTIVE IDENTIFICATION/LOCATION MEANS",** according to claim 1, ***characterized* by** a NFC chip (22) with a lifecycle of more than 10 thousand reading, operational temp./hum. of 10 to 60°C / of 20% to 60% RH and storage temp./hum. of 20 to 30°C/20% to 60% RH.

3. **"IMPROVEMENTS TO A SYSTEM INTENDED FOR THE NATIONAL REGISTRATION OF PETS AND RESPECTIVE IDENTIFICATION/LOCATION MEANS",** according to claim 1, ***characterized* by** steps comprising the system(10) accessibility for the registration of pets including:
a) purchase of the tag (21) in a site or authorized distributor;
b) access to the platform (30) so as to confirm the service hiring activating the tag (21) by providing the code (CD), as well as the confirmation of the register with information (I1) and (12) and activation of the information (13) related to the type of contact desired;
c) subsequently, the platform generates a *web*/*link* page with the pet record and identification;
d) The procedures are completed by processing all the information (I1)/(I2)/(I3) and defining the alert types;
e) after the previous step, the tutor must attach the tag (21) to the pet's collar.

4. **"IMPROVEMENTS TO A SYSTEM INTENDED FOR THE NATIONAL REGISTRATION OF PETS AND RESPECTIVE IDENTIFICATION/LOCATION MEANS",** according to claim 1, ***characterized* by** steps comprising the beginning of the location by the system (10) including:
a) in the lack of the pet or the identification that it is lost or escaped, the tutor may or not share with the other people by means of a post in the platform informing the entire community that his/her pet escaped or is lost; all the platform (30) users view the tutors' posts in increasing order, where the last posts are viewed in first place in the list, as well, as a geolocation map indicating the animals lost in that region.
b) an individual finds the lost animal and by immediately viewing the tag (21) identifies it is lost by proceeding with the tag (21) reading with his/her cell phone or contacts the call center number (24c) informing he/she found the lost animal; after reading the tag (21), the animal record is shown in a maximum time interval of 7s;
c) in case he/she decides to contact the call center, an attendant request the tag (21) number in order to contact the tutor and proceed with the intermediation/connection between the tutor and the person who found the pet so as to schedule the rescue;
d) in case the individual who found the pet decides to read the tag (21) with the NFC code and QRCODE, an internet browser is opened with the entire record/profile of the found animal showing only the tutor name and the town of residence and in such web screen of the found animal record/profile there's a button with the CHAT name so as the individual who found the animal is able to start a conversation via CHAT with the tutor, being at the tutor's discretion to inform the data through the CHAT and schedule the rescue of his/her lost animal; whenever a person reads the pet tag (21), the tutor receives an alert by some means he/she has chosen or by all the active means, being that such alert will show the tutor the date and time the tag (21) was read and in case the person who read the Tag has the geolocation active in his/her smartphone/cell phone, in such alert, the tutor also receives the location where the reading was conducted containing the street name, the state, the city and the neighborhood, if available; and
e) following the connection between the person who found the pet and the tutor, the parties agree the best way to meet and deliver the pet.

5. **"IMPROVEMENTS TO A SYSTEM INTENDED FOR THE NATIONAL REGISTRATION OF PETS AND RESPECTIVE IDENTIFICATION/LOCATION MEANS",** according to claim 1, and in a second tag (21) variation; ***characterized* by** the fact that the tag (21) comprises the graphic printing with information (15) to the external face (fl') of a ring (22') structure comprising a tubular strap (21a') provided with a fastener or not, presenting an external member (21b') presenting distinct formats, such as triangular, tubular or other ones which receive a RFID microchip.

6. **"IMPROVEMENTS TO A SYSTEM INTENDED FOR THE NATIONAL REGISTRATION OF PETS AND RESPECTIVE IDENTIFICATION/LOCATION MEANS",** according to claim 1, and in a third variation of the tag; ***characterized* by** a tag (21) comprising a graphic printing with information (I5") on the external face (f1") of a plate (22") placed on rectangular, oblong brackets (22b") or with another appropriate format in reflective belts (22a") which may comprise a neck collar (CL); a chest collar or a body collar of animals such as dogs and cats.

7. **"IMPROVEMENTS TO A SYSTEM INTENDED FOR THE NATIONAL REGISTRATION OF PETS AND RESPECTIVE IDENTIFICATION/LOCATION MEANS"** according to claim 1, ***characterized* by** a pet registration system (10) presenting an interface (31) provided by additional animal identification means, comprising an step of (a) capturing the escaping/lost animal snout image (FT1); and (b) processing and identification of the found animal snout/face image (FT1) characteristics compared with the images (FT) available in the databank (BD) so that the responsible tutor is contacted.
